# EUROPÄISCHE PATENTSCHRIFT

(11) **EP 3 797 062 B1**
(45) Veröffentlichungstag und Bekanntmachung des Hinweises auf die Patenterteilung: **13.04.2022**
(21) Anmeldenummer: 19722812.5
(22) Anmeldetag: 29.04.2019
(51) Int. Cl.: B62D 33/06, B62D 33/067

(54) **FAHRERHAUSSTABILISATOR**
DRIVER'S CAB STABILISER
STABILISATEUR DE CABINE DE CONDUITE

(30) Priorität: 23.05.2018 DE 102018208092
(43) Veröffentlichungstag der Anmeldung: 31.03.2021
(73) Patentinhaber: ZF Friedrichshafen AG, 88046 Friedrichshafen (DE)
(72) Erfinder: WANG, Xiaocen, 49448 Lemförde (DE); RATERMANN, Wolfgang, 49163 Bohmte (DE); LÖSCHE, Christian, 32351 Stemwede (DE)
(86) Internationale Anmeldenummer: PCT/EP2019/060843
(87) Internationale Veröffentlichungsnummer: WO 2019/223956

(56) Entgegenhaltungen:
- WO-A1-2018/095662
- DE-A1-102009 011 798
- DE-A1-102010 035 976
- DE-A1-102014 221 141

## Beschreibung

Die Erfindung betrifft einen Fahrerhausstabilisator gemäß dem Oberbegriff von Patentanspruch 1.

Fahrerhausstabilisatoren, beispielsweise zur Wankstabilisierung eines Nutzfahrzeug-Fahrerhauses, sind aus dem Stand der Technik bekannt. Fahrerhausaufhängungen für Nutzfahrzeuge weisen in der Regel vier Anbindungspunkte zwischen Rahmenlängsträgern eines Fahrgestellrahmens und dem Fahrerhaus auf. Hierbei sind sowohl im vorderen als auch im hinteren Bereich des Fahrerhauses jeweils zwei Anbindungen vorgesehen, die einerseits die Fahrsicherheit und den Fahrkomfort für den Fahrzeugführer und andererseits ein einfaches, zuverlässiges Kippen des Fahrerhauses zu Wartungs- und Reparaturzwecken gewährleisten sollen. Um zu große Wankbewegungen eines Nutzfahrzeug- Fahrerhauses, etwa während der Fahrt auf schlechten Wegstrecken oder bei Kurvenfahrt, zu verhindern, sind vielfach die beiden vorderen Fahrerhausanbindungspunkte mittels eines Fahrerhausstabilisators verbunden. Derartige Fahrerhausstabilisatoren weisen eine sich in einer Fahrzeugquerrichtung erstreckende Drehstabfeder auf, die beispielsweise als ein Torsionsrohr ausgebildet sein kann.

Bei einem aus dem Stand der Technik bekannten Fahrerhausstabilisator gemäß DE 10 2010 035 976 A1 sind die Enden der Drehstabfeder indirekt mit zwei sich in einer Fahrzeuglängsrichtung parallel zueinander erstreckenden Stabilisatorhebeln verbunden, die einenends an die Rahmenlängsträger des Fahrgestellrahmens angebunden sind. Die indirekte Verbindung ist dadurch umgesetzt, dass die Enden der Drehstabfeder über Verbindungselemente mit den Stabilisatorhebeln fest verbunden sind. Der Fahrerhausstabilisator weist zur Vereinfachung der Montage eine innerhalb desselben liegende Montageschnittstelle auf, die jeweils zwischen den Stabilisatorhebeln und den Verbindungselementen verläuft. Dazu weisen die Stabilisatorhebel, die in Kurzform auch als Hebel bezeichnet werden, jeweils zwei rechtwinklig zueinander ausgerichtete Funktionsflächen auf, die mit korrespondierenden Flächen der Verbindungselemente zusammenwirken. Die Herstellung dieser Flächen ist zum einen aufgrund der Anzahl der Flächen aufwendig und zum anderen aufgrund geringer Toleranzen, die eingehalten werden müssen, damit im Einbauzustand eine möglichst vollflächige Anlage der pro Seite jeweils rechtwinklig zueinander ausgerichteten Flächen gegeben ist.

Aufgabe der Erfindung ist es, einen Fahrerhausstabilisator mit einer Montageschnittstelle bereitzustellen, die mit relativ geringem Aufwand hergestellt werden kann.

Diese Aufgabe wird gemäß der vorliegenden Erfindung gelöst durch einen Fahrwerkstabilisator mit den Merkmalen des unabhängigen Anspruchs 1.

Bevorzugte Ausführungsformen und Weiterbildungen sind Gegenstand der Unteransprüche. Weitere Merkmale und Details der Erfindung ergeben sich aus der Beschreibung und den Zeichnungsfiguren.

Die Erfindung sieht demnach einen Fahrerhausstabilisator mit zwei sich in einer Fahrzeuglängsrichtung parallel zueinander erstreckenden Hebeln vor, die in Fahrzeuglängsrichtung jeweils durch ein Verbindungselement verlängert sind. Weiterhin ist eine sich in einer Fahrzeugquerrichtung zwischen den beiden Verbindungselementen erstreckenden Drehstabfeder vorgesehen, die an ihren beiden Enden über das jeweils zugeordnete Verbindungselement indirekt mit dem jeweils zugeordneten der beiden Hebel fest verbunden ist. Zur Vereinfachung der Montage weist der Fahrerhausstabilisator eine innerhalb desselben liegende Montageschnittstelle auf. Erfindungsgemäß ist die Montageschnittstelle durch insgesamt genau zwei, in sich ebene und sich zugleich in Fahrzeugquerrichtung erstreckende Trennungen gebildet, die jeweils zwischen den beiden Verbindungselementen und dem diesen jeweils zugeordneten Hebel verlaufen.

Unter einer Trennung ist im Zusammenhang mit der vorliegenden Erfindung ganz allgemein eine Unterbrechung des Materials des Fahrerhausstabilisators zu verstehen. Insbesondere ist auf jeder Fahrzeugseite eine der insgesamt genau zwei Trennungen vorgesehen. Insbesondere verlängern die Verbindungselemente die Hebel jeweils in der gleichen Richtung, insbesondere in einer sich ebenfalls in Fahrzeuglängsrichtung erstreckenden Fahrtrichtung. Insbesondere ist der Fahrerhausstabilisator als ein Wankstabilisator ausgebildet. Durch die beiden Trennungen ist der Fahrerhausstabilisator zum einen in die beiden Hebel und zum anderen in die Drehstabfeder mit den beiden Verbindungselementen aufgeteilt. Vorzugsweise bilden dabei die Drehstabfeder und die beiden jeweils endseitig und zugleich fest an die Drehstabfeder angebundenen Verbindungselemente eine Unterbaugruppe, die darüber hinaus auch noch weitere Bauteile aufweisen kann. Diese Unterbaugruppe kann im Rahmen der sogenannten Hochzeit, bei der ein Fahrerhaus auf einen Fahrgestellrahmen aufgesetzt wird, direkt oder indirekt an die Fahrerkabine angebunden sein, während die Hebel direkt oder indirekt an einen Fahrgestellrahmen angebunden sind. Beim Aufsetzen des Fahrerhauses auf den Fahrgestellrahmen wird die vorgenannte Montagsschnittstelle geschlossen. Diese Vorgehensweise hat den Vorteil, dass im Rahmen der Hochzeit nur eine einzige Montageschnittstelle zu schließen ist. Läge der Fahrerhausstabilisator dagegen einstückig vor, müssten zwei Montageschnittstelen geschlossen werden, nämlich eine zur Fahrerkabine und eine zum Fahrgestellrahmen, was die ohnehin komplexe Montagesituation bei der Hochzeit weiter komplizieren würde.

Es ist alternativ auch eine Ausgestaltung möglich, bei der der Fahrerhausstabilisator in die zuvor beschriebene Unterbaugruppe und in die beiden Hebel aufgeteilt ist, wobei die Hebel allerdings neben dem Fahrgestellrahmen zugleich auch direkt oder indirekt an das Fahrerhaus angebunden sind. Das bedeutet im Umkehrschluss, dass die die Drehstabfeder und die beiden Verbindungselemente aufweisende Unterbaugruppe weder an die Fahrerkabine noch an den Fahrgestellrahmen angebunden ist. Hierdurch wird es möglich, die Unterbaugruppe im Reparaturfall, beispielsweise bei einem notwenigen Austausch eines Fahrzeugkühlers, leicht zu demontieren und anschließend mit relativ geringem Aufwand wieder zu montieren. Ein aufwendiger Ausbau und späterer Wiedereinbau des kompletten Fahrerhausstabilisators ist nicht erforderlich.

Neben Montagevorteilen bietet die erfindungsgemäße Lösung mit insgesamt genau zwei Trennungen, die in sich eben ausgebildet sind, auch Kostenvorteile bei der Bearbeitung. Dies liegt darin begründet, dass die Anzahl der zu bearbeitenden Flächen, die im montierten Einbauzustand des Fahrerhausstabilisators jeweils paarweise aneinander anliegen, auf insgesamt lediglich vier in sich ebene Flächen reduziert ist. Dabei ist jede dieser vier in sich ebenen Flächen einem anderen Bauteil des Fahrerhausstabilisators zugeordnet. Die Enden der Drehstabfeder können stoffschlüssig und/oder formschlüssig und/oder kraftschlüssig mit den beiden Verbindungselementen verbunden sein. Vorzugsweise sind die Verbindungselemente und die Hebel durch Klemmmittel, insbesondere Schrauben, gegeneinander verspannt, so dass sich die Hebel und die zugeordneten Verbindungselemente im montierten Einbauzustand des Fahrerhausstabilisators, insbesondere während eines Fahrbetriebs, jeweils wie einstückige Hebel verhalten. Die Klemmmittel erstrecken sich dabei insbesondere zumindest im Wesentlichen in Fahrzeuglängsrichtung. Insbesondere liegen im Bereich der insgesamt zwei Trennungen jeweils genau eine, in sich ebene, Stirnfläche des Hebels und genau eine, ebenfalls in sich ebene, Stirnfläche des zugeordneten Verbindungselements zumindest im Wesentlichen vollflächig berührend, also ohne Abstand, aneinander an. Insbesondere sind die Trennungen und die Stirnflächen dabei von den Klemmmitteln, insbesondere Schrauben, durchsetzt. Vorzugsweise sind die Stirnflächen spanend bearbeitet, insbesondere gefräst. Die Hebel und/oder die Verbindungselemente können als Gussteile oder als Schmiedeteile, insbesondere Gesenkschmiedeteile, ausgebildet sein.

Vorteilhaft erstrecken sich die genau zwei Trennungen jeweils in einer Ebene, die durch die Fahrzeugquerrichtung und eine Fahrzeughochrichtung aufgespannt ist. Insbesondere erstrecken sich die Trennungen in derselben Ebene, die durch die Fahrzeugquerrichtung und eine Fahrzeughochrichtung aufgespannt ist. Durch eine derartige Anordnung ist eine querkraftfreie Verbindung zwischen der zuvor beschriebenen Unterbaugruppe und den beiden Hebeln gegeben. Die Fahrzeuglängsrichtung, die Fahrzeugquerrichtung und die Fahrzeughochrichtung sind jeweils rechtwinklig zueinander ausgerichtet und beziehen sich insbesondere jeweils auf den Einbauzustand des Fahrerhausstabilisators in einem Nutzfahrzeug.

Bevorzugt sind die insgesamt zwei Trennungen jeweils von einem sich in der Fahrzeuglängsrichtung erstreckenden Zentriermittel durchsetzt. Durch die Erstreckung des Zentriermittels in Fahrzeuglängsrichtung kann die vorgenannte Unterbaugruppe, die die Drehstabfeder und die Verbindungselemente aufweist, im Wartungsfall, beispielsweise bei einer Kühlerreparatur, in Fahrzeuglängsrichtung, insbesondere in Fahrtrichtung, leicht von den Hebeln abgezogen werden. Ein zusätzliches, anstrengendes Anheben der vorgenannten Unterbaugruppe ist nicht erforderlich.

Zweckmäßig ist das Zentriermittel als ein Zentrierstift ausgebildet, der jeweils fest in einem der Teile von Verbindungselement und Hebel sitzt, wobei der Zylinderstift für das andere der Teile von Verbindungselement und Hebel einen Montageanschlag in Fahrzeughochrichtung bildet. Auf diese Weise wird das Ausrichten der Verbindungselemente und der jeweils zugeordneten Hebel relativ zueinander vereinfacht. Insbesondere ist der Montageanschlag derart angeordnet, dass beim Anschlagen in Fahrzeughochrichtung eine Schraubposition erreicht ist, in der die Klemmmittel, insbesondere die Schrauben, eingesetzt werden können. Vorteilhaft sind die Verbindungselemente und die Hebel zumindest im Bereich der Trennungen gleich breit in Fahrzeugquerrichtung ausgebildet. Bei einer solchen Konstellation kann die Ausrichtung der Verbindungselemente und der Hebel auf einfache Weise dadurch erfolgen, dass der Montageanschlag in Fahrzeughochrichtung genutzt wird und zugleich die jeweils zugeordneten Verbindungselemente und Hebel im Bereich der Trennungen bündig zueinander ausgereichtet werden. Obwohl es sich vorliegend um ein sogenanntes verdecktes Fügen handelt, bei dem beispielsweise ein Einschraubgewinde durch einen der Fügepartner verdeckt ist, lässt sich das Fügen, insbesondere das Verschrauben, effektiv und ohne größeren Ausrichtaufwand bewerkstelligen. Vorzugsweise sitzt der Zylinderstift jeweils fest in dem Hebel. Der Zentrierstift kann eine dem anderen der Teile von Verbindungselement und Hebel zugewandte Spitze aufweisen. Bevorzugt weist der Zylinderstift allerdings eine Zylinderform ohne Spitze auf.

Gemäß einer Weiterbildung der Erfindung ist ein freies Ende des Zentriermittels, insbesondere des Zentrierstiftes, jeweils von dem anderen der Teile von Verbindungselement und Hebel umfänglich maximal zur Hälfte, also um 180 Grad, umschlossen. Insbesondere liegt das Zentriermittel, insbesondere der Zentrierstift, dabei zumindest im Wesentlichen umfänglich anliegend an dem anderen der Teile von Verbindungselement und Hebel an. Insbesondere ist die Anlagefläche des anderen der Teile von Verbindungselement und Hebel unbearbeitet. Durch die umfängliche Umschließung des Zentriermittels um maximal 180 Grad liegt das Zentriermittel in einer Wannenlage. Dadurch ist im Rahmen der Montage eine selbstzentrierende Wirkung gegeben, insbesondere, wenn das Zentriermittel als ein zylinderförmiger Zentrierstift ausgebildet ist.

Vorteilhaft weist zumindest ein Verbindungselement eine fahrbahnseitig offene und zugleich zu der zugeordneten Trennung hin offene Fangausnehmung auf, in die das Zentriermittel, insbesondere der Zentrierstift, eingreift. Insbesondere weist die Fangausnehmung Zentrierschrägen auf, die sich in Fahrzeuglängsrichtung erstrecken und die in Fahrzeughochrichtung zu der fahrbahnseitigen Öffnung hin erweitert ausgebildet sind. Insbesondere weist die Fangausnehmung eine unbearbeitete Oberfläche auf, wodurch der Bearbeitungsaufwand gering gehalten wird. Insbesondere weist die Fangausnehmung in einer durch die Fahrzeughochrichtung und die Fahrzeugquerrichtung aufgespannten Schnittebene eine halbrunde Kontur zur Aufnahme des Zentrierstiftes, einen sich fahrbahnseitig daran anschließenden Konturbereich mit konstanter Breite und schließlich die sich beidseitig daran anschließenden und sich zugleich fahrbahnseitig öffnenden Zentrierschrägen auf. Durch die Fangausnehmung wird die zuvor beschriebene selbstzentrierende Wirkung noch verstärkt, beispielsweise wenn die vorgenannte Unterbaugruppe, die die Drehstabfeder und die Verbindungselemente aufweist, in Fahrzeughochrichtung gegenüber den in ihre Lage verharrenden Hebeln bis zum Anschlag abgesenkt wird. Insbesondere ist Fangausnehmung in Fahrzeughochrichtung hinterschnittfrei ausgebildet, so dass sie kostengünstig durch Urformen oder Umformen hergestellt werden kann. Auf ein aufwendiges Bohren zusätzlicher Zentrierlöcher kann verzichtet werden.

Bevorzugt weisen die Verbindungselemente jeweils eine fahrbahnseitig ausgerichtete Anschlagfläche für einen Anschlagpuffer auf, wobei sich die Anschlagflächen zumindest im Wesentlichen in einer durch die Fahrzeuglängsrichtung und die Fahrzeugquerrichtung aufgespannten Ebene erstrecken. Insbesondere sind die Anschlagflächen im Einbauzustand des Fahrerhausstabilisators fahrbahnseitig ausgerichtet, also einer Fahrbahn zugewandt. Insbesondere, wenn das Fahrerhaus direkt an die Drehstabfeder oder an die Verbindungselemente angebunden ist, können hohe Vertikalkräfte auf diese Weise günstig auf direktem Weg in den Fahrgestellrahmen weitergeleitet werden. Mit dem "direkten Weg" ist in diesem Zusammenhang gemeint, dass die hohen, in Fahrzeughochrichtung wirkenden, Vertikalkräfte nicht über die Trennungen und somit über die Klemmmittel, insbesondere die Schrauben, geleitet werden. Hohe Vertikalkräfte können beispielsweise auftreten, wenn der Fahrerhausstabilisator zugleich Teil einer vorderen Fahrerhauslagerung ist und das Fahrerhaus um eine in Fahrzeugquerrichtung verlaufende Achse der Drehstabfeder gekippt ist. Insbesondere ist die Fangausnehmung derart in diese Anschlagfläche eingelassen, dass die Zentriermittel, insbesondere die Zentrierstifte, im montierten Zustand des Fahrerhausstabilisators fahrbahnseitig nicht vorstehen.

Zudem ist es bevorzugt, dass die Verbindungselemente jeweils ein mit einer unrunden Innenumfangskontur versehenes Lagerauge aufweisen und die Drehstabfeder zumindest an ihren Enden jeweils mit einer an die unrunden Innenumfangskonturen der Lageraugen angepassten, unrunden Außenumfangskontur versehen ist und mit diesen unrunden Außenumfangskonturen in dem jeweils zugeordneten Lagerauge sitzt. Die unrunden Außenumfangskonturen der Endbereiche der Drehstabfeder sowie die dazu formkorrespondierenden, unrunden Innenumfangskonturen der Verbindungselemente bilden bevorzugt jeweils eine polygonale Umfangskontur, beispielsweise eine dreieckige Umfangskontur. Die Ecken der polygonalen Konturen sind dabei vorzugsweise abgerundet. Ferner können die Seiten der polygonalen Konturen beispielsweise gekrümmt verlaufen. Alternativ können die unrunden Konturen aber auch jeweils durch eine ovale Kontur gebildet sein. Durch polygonale Konturen kann die unter Drehmomentbelastung im Material auftretende Kerbwirkung erheblich reduziert werden.

Zweckmäßig ist die Drehstabfeder als ein Torsionsrohr ausgebildet, das in seinen beiden Enden jeweils einen Pressstopfen aufweist, der jeweils eine an unrunde Innenumfangskonturen der Enden des Torsionsrohres angepasste, unrunde Außenumfangskontur aufweist und der jeweils mit dem zugeordneten Ende des Torsionsrohres sowie mit dem zugeordneten Lagerauge eine Presspassung bildet. Insbesondere sind die Pressstopfen jeweils in ein Ende des Torsionsrohres eingepresst. Insbesondere ist die Außenumfangskontur des Pressstopfens ebenfalls unrund und zugleich formkorrespondierend zu der Innenumfangskontur des zugeordneten Endes des Torsionsrohres ausgebildet. Insbesondere weist der Pressstopfen ebenfalls eine polygonale Umfangskontur auf, wodurch das langfristig schadensfrei übertragbare Drehmoment erhöht werden kann. Insbesondere ist das Torsionsrohr lediglich an seinen Enden unrund ausgebildet. Alternativ kann das Torsionsrohr aber auch über seine komplette Erstreckung in Fahrzeugquerrichtung als gleichbleibend unrundes Profilrohr ausgebildet sein. Die Ausbildung der Drehstabfeder als Torsionsrohr wirkt sich gegenüber einer massiven Ausführung gewichtsreduzierend aus.

Vorteilhaft weist jeder der beiden Pressstopfen außerhalb des Torsionsrohres eine Lagerstelle zur Anbindung eines Fahrerhauses und/oder eines Fahrgestellrahmens auf. Durch die Erweiterung des ohnehin vorhandenen Pressstopfens um eine Lagerstelle kann eine kostengünstige Lagerung bereitgestellt werden. Insbesondere ist die Lagerstelle einstückig mit dem Pressstopfen ausgebildet. Die Lagerstelle kann beispielsweise zylindrisch ausgebildet sein und zur Aufnahme einer Lagerbuchse oder mehrerer Lagerbuchsen dienen, über die das Fahrerhaus und/oder der Fahrgestellrahmen an den Pressstopfen angebunden ist. Die Lagerstelle kann einen Lagerabschnitt oder mehrere Lagerabschnitte mit unterschiedlichen Durchmessern aufweisen. Die Anbindung des Pressstopfens an den Fahrgestellrahmen kann jeweils auch indirekt über einen zwischengeschalteten Dämpfer oder eine zwischengeschaltete Feder oder ein zwischengeschaltetes Feder- Dämpfer- Element, welches beispielsweise aus einer Luftfeder mit integriertem Dämpfer gebildet ist, realisiert sein. Der um die Lagerstelle erweiterte Pressstopfen kann günstig als Automatendrehteil hergestellt werden.

Gemäß einer Alternative weist jeder der beiden Hebel an seinem, dem zugeordneten Verbindungselement zugewandten, Endabschnitt eine Fahrerhausanbindung und/oder eine Fahrgestellrahmenanbindung auf. Die Anbindung Fahrgestellrahmens kann auch hier indirekt über einen zwischengeschalteten Dämpfer oder eine zwischengeschaltete Feder oder ein zwischengeschaltetes Feder- Dämpfer- Element realisiert sein. Die Dämpferanbindung kann alternativ auch an die Fahrerhausanbindung gekoppelt sein. Ansonsten ist der Fahrerhausstabilisator wie zuvor beschreiben aufgebaut. Mit einer derartigen Ausführung wird eine montagefreundliche Entnahme der bereits zuvor beschriebenen Unterbaugruppe ermöglicht, die die Drehstabfeder und die beiden endseitig daran angebundenen Verbindungselemente aufweist. Die Montagefreundlichkeit liegt insbesondere auch darin begründet, dass die Pressstopfenverbindung zwischen den Pressstopfen, den Enden der Drehstabfeder und den Lageraugen der Verbindungselemente nicht gelöst und, beispielsweise nach erfolgtem Kühleraustausch, nicht wieder zusammengebaut werden muss. Die Entnahme dieser Unterbaugruppe erfolgt dabei vorzugsweise in der Fahrtrichtung, um beispielsweise den Montageaufwand im Falle eines notwendigen Austauschs des Fahrzeugkühlers zu verringern. Die Fahrerhausanbindung und die Fahrgestellrahmenanbindung können konstruktiv beispielsweise als Molekulargelenke, die auch als Pratzengelenke bezeichnet werden, umgesetzt sein. Insbesondere weist der Pressstopfen bei dieser Ausgestaltung außerhalb des Torsionsrohres keine Lagerstelle auf.

Im Folgenden wird die Erfindung anhand lediglich Ausführungsbeispiele darstellender Zeichnungen näher erläutert, wobei sich gleiche Bezugszeichen auf gleiche, ähnliche oder funktional gleiche Bauteile oder Elemente beziehen. Dabei zeigt:
Fig. 1 in einer perspektivische Darstellung einen vorderen Teil eines Nutzfahrzeugs mit einer vorderen und einer hinteren Fahrerhauslagerung und mit einem Fahrerhausstabilisator gemäß einer ersten Ausführungsform der Erfindung;
Fig. 2 in einer perspektivischen Darstellung die vordere Fahrerhauslagerung gemäß Figur 1;
Fig. 3 in einer perspektivischen, teilweise explodierten Darstellung den Fahrerhausstabilisator gemäß Figur 1;
Fig. 4 in einer Schnittdarstellung den Fahrerhausstabilisator gemäß Figur 3 gemäß dem dort angegebenen Schnittverlauf A - A;
Fig. 5 in einer Schnittdarstellung den Fahrerhausstabilisator gemäß Figur 4 analog zu dem dort angegebenen Schnittverlauf B - B;
Fig. 6 in einer perspektivischen, teilweise explodierten Darstellung die hintere Fahrerhauslagerung gemäß Figur 1 und
Fig. 7 eine perspektivische Darstellung eines Fahrerhausstabilisators gemäß einer zweiten Ausführungsform der Erfindung.

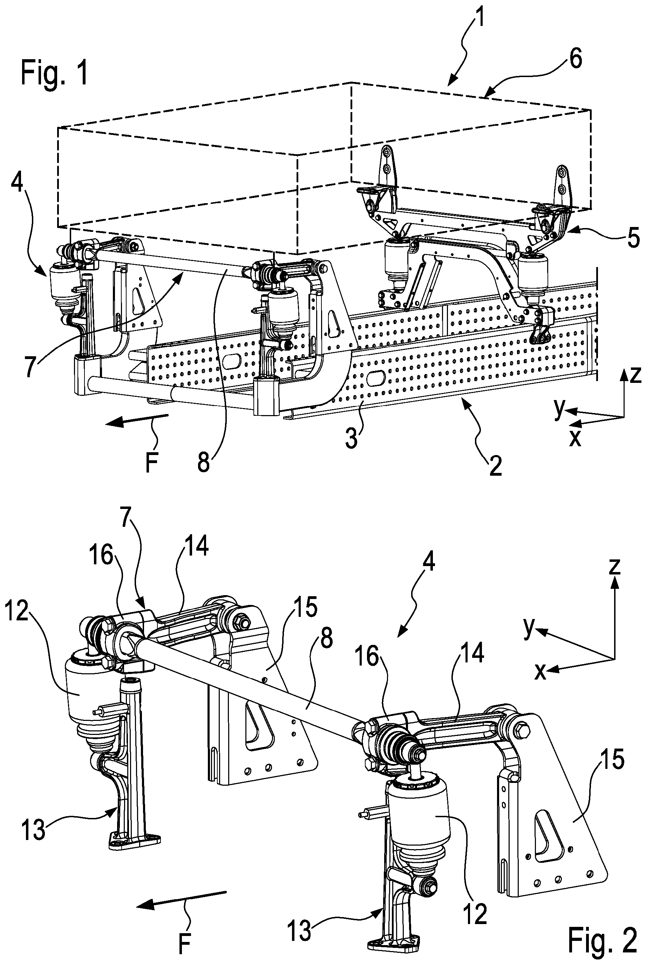

Fig. 1 zeigt einen vorderen Teil eines Nutzfahrzeugs 1, aufweisend einen Fahrgestellrahmen 2 mit zwei sich in einer Fahrzeuglängsrichtung x erstreckenden Rahmenlängsträgern 3. Zur besseren Orientierung ist die Fahrtrichtung F eingetragen, die sich ebenfalls in Fahrzeuglängsrichtung x erstreckt. Die beiden Rahmenlängsträger 3 tragen eine vordere Fahrerhauslagerung 4 und eine hintere Fahrerhauslagerung 5, die zusammen wiederum ein schematisch dargestelltes Fahrerhaus 6 tragen. Die vordere Fahrerhauslagerung 4 weist einen Fahrerhausstabilisator 7 mit einer sich in einer Fahrzeugquerrichtung y erstreckenden Drehstabfeder 8 auf. Die Drehstabfeder 8 ist als ein Torsionsrohr ausgebildet, das in seinen beiden Enden 9 jeweils einen hier nicht sichtbaren Pressstopfen 10 aufweist, der jeweils außerhalb des Torsionsrohres 8 eine Lagerstelle 11 zur Anbindung des Fahrerhauses 6 und des Fahrgestellrahmens 2 aufweist. Die Anbindung der Lagerstellen 11 an das Fahrerhaus 6 ist hier lediglich schematisch dargestellt. Die Anbindung der Lagerstellen 11 an die Rahmenlängsträger 3 des Fahrgestellrahmens 2 ist unter Zwischenschaltung weiterer Bauteile umgesetzt.

In Fig. 2 ist in vergrößerter Darstellung zu erkennen, dass es sich bei den weiteren Bauteilen je Fahrzeugseite um ein Feder- Dämpfer- Element 12 und eine damit verbundene Konsole 13 handelt. Das Feder- Dämpfer- Element 12 ist jeweils über eine Lagerbuchse an die Lagerstellen 11 und an die Konsolen 13 angebunden. Die Konsole 13 zeichnet sich dadurch aus, dass sie einstückig als ein Gussteil ausgebildet ist. Im Bereich der vorderen Fahrerhauslagerung 4 wird die anteilige Gewichtskraft des Fahrerhauses 6 zunächst über die Fahrerhausanbindungen in die Lagerstellen 11 und von dort aus über die Feder- Dämpfer- Elemente 12 in die Konsolen 13 übertragen, die wiederum an den jeweils zugeordneten Rahmenlängsträger 3 angeschraubt sind. Neben den beiden Lagerstellen 11 ist der Fahrerhausstabilisator 7 auch über zwei sich in Fahrzeuglängsrichtung x parallel zueinander erstreckende Hebel 14 indirekt, nämlich über zwei hintere Konsolen 15, an die Rahmenlängsträger 3 angebunden.

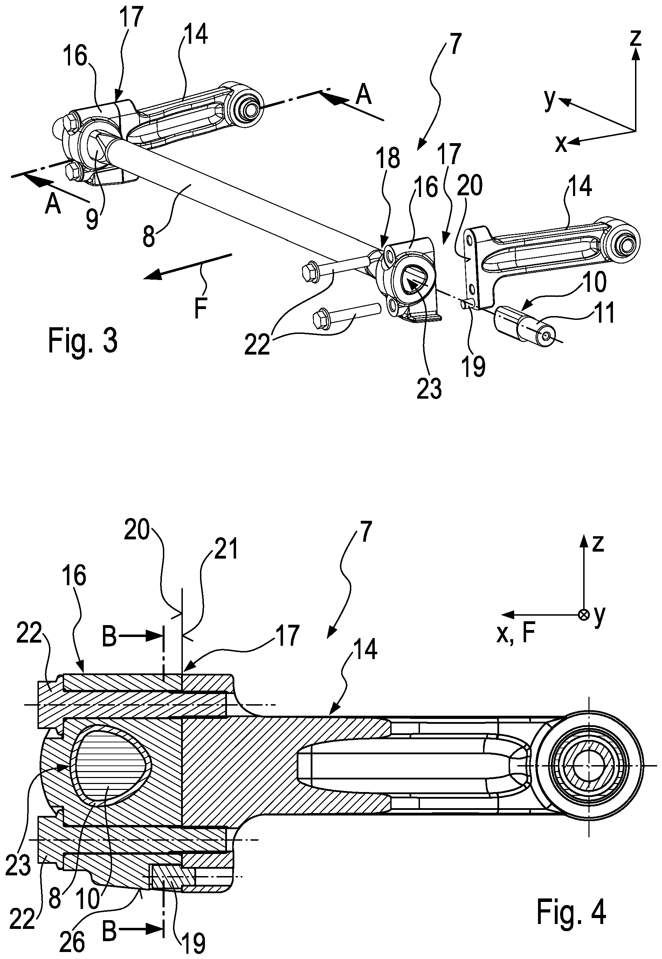

Fig. 3 zeigt den Fahrerhausstabilisator 7 mit den beiden sich in Fahrzeuglängsrichtung x parallel zueinander erstreckenden Hebeln 14, wobei die Hebel 14 in Fahrzeuglängsrichtung x jeweils durch ein Verbindungselement 16 verlängert sind. Die sich in Fahrzeugquerrichtung y erstreckende, als Torsionsrohr ausgebildete Drehstabfeder 8 erstreckt sich zugleich zwischen den beiden Verbindungselementen 16. An ihren beiden Enden 9 ist das Torsionsrohr 8 mittels des jeweils zugeordneten Verbindungselements 16 indirekt mit dem jeweils zugeordneten der beiden Hebel 14 fest verbunden. Zur Vereinfachung der Montage weist der Fahrerhausstabilisator 7 eine innerhalb desselben liegende Montageschnittstelle 17 auf, die durch insgesamt genau zwei, in sich ebene und sich zugleich in Fahrzeugquerrichtung y erstreckende, Trennungen 17 gebildet ist. Die Trennungen 17 verlaufen zwischen den beiden Verbindungselementen 16 und dem diesen jeweils zugeordneten Hebel 14. Durch die Trennungen 17 ist der Fahrerhausstabilisator 7 aufgeteilt in die Hebel 14 und in eine Unterbaugruppe 18, die zumindest das Torsionsrohr 8 und die Verbindungselemente 16 aufweist. Die genau zwei Trennungen 17 erstrecken sich dabei in einer gemeinsamen Ebene, die durch die Fahrzeugquerrichtung y und eine Fahrzeughochrichtung z aufgespannt ist. Im Bereich der insgesamt zwei Trennungen 17 liegen jeweils genau eine, in sich ebene, gefräste Stirnfläche 20 des Hebels 14 und genau eine, ebenfalls in sich ebene, gefräste Stirnfläche 21 des zugeordneten Verbindungselements 16 im Wesentlichen vollflächig berührend aneinander an. Die insgesamt zwei Trennungen 17 sind jeweils von einem sich in Fahrzeuglängsrichtung x erstreckenden Zentriermittel 19 durchsetzt, das als ein Zentrierstift ausgebildet ist. Dabei sitzt der Zentrierstift 19 jeweils fest in dem Hebel 14 und bildet für das jeweilige Verbindungselement 16 einen Montageanschlag in Fahrzeughochrichtung z.

Wie aus Fig. 4 hervorgeht, sind die Verbindungselemente 16 und die Hebel 14 im montierten Zustand durch sich in Fahrzeuglängsrichtung x erstreckende Klemmmittel 22, die als Schrauben ausgebildet sind, gegeneinander verspannt. Die genau zwei Trennungen 17 und die Stirnflächen 20, 21 sind dabei von den Schrauben 22 durchsetzt. Die Verbindungselemente 16 weisen jeweils ein sich in Fahrzeugquerrichtung y erstreckendes Lagerauge 23 mit einer polygonal unrunden Innenumfangskontur auf. Das Torsionsrohr 8 ist nur an seinen beiden Enden 9 jeweils mit einer, an die polygonal unrunden Innenumfangskonturen der Lageraugen 23 angepassten, polygonal unrunden Außenumfangskontur versehen und sitzt mit diesen polygonal unrunden Außenumfangskonturen in dem jeweils zugeordneten Lagerauge 23. In seinen beiden Enden 9 weist das Torsionsrohr 8 jeweils den bereits vorgestellten Pressstopfen 10 auf, der jeweils eine, an polygonal unrunde Innenumfangskonturen der Enden 9 des Torsionsrohres 8 angepasste, polygonal unrunde Außenumfangskontur aufweist und der jeweils mit dem zugeordneten Ende 9 des Torsionsrohres 8 sowie mit dem zugeordneten Lagerauge 23 eine Presspassung bildet. Die schraffiert dargestellten Schnittflächen erstrecken sich in einer Ebene, die durch die Fahrzeuglängsrichtung x und durch die Fahrzeughochrichtung z aufgespannt ist. Dadurch, dass die Schnittfläche des dargestellten Hebels 14 über seine Längserstreckung in Fahrzeuglängsrichtung x ausläuft, wird deutlich, dass sich der dargestellte Hebel 14, ebenso wie der Hebel 14 auf der anderen Fahrzeugseite, nicht exakt parallel zueinander in Fahrzeuglängsrichtung x erstrecken, sondern von dem Verbindungselement 16 aus leicht nach fahrzeugaußen hin abgebogen ausgebildet sind. Trotzdem soll die Erstreckung der Hebel 14 vorliegend als parallel zueinander und zugleich in Fahrzeuglängsrichtung x verlaufend betrachtet werden.

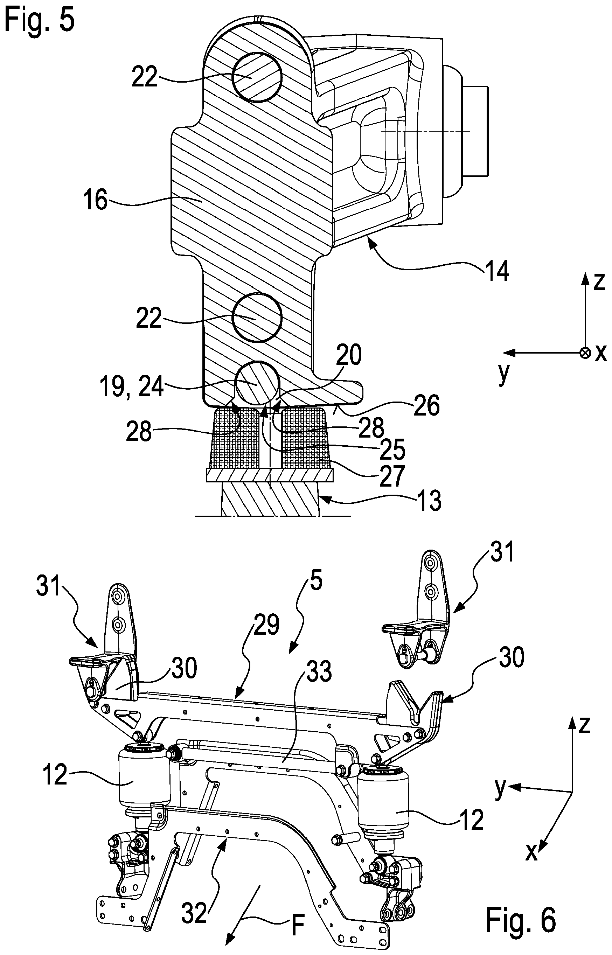

Die, bei Betrachtung von dem Verbindungselement 16 aus, leicht nach fahrzeugaußen hin abgebogene Ausbildung des Hebels 14 ist auch in Fig. 5 zu erkennen. Fig. 5 zeigt dabei einen Schnitt durch die in Fig. 3 explodiert dargestellte Verbindungsanordnung an der in Fig. 4 als Schnittverlauf B - B gekennzeichneten Stelle. Der Schnitt verläuft dabei durch das Verbindungselement 16 und ein freies Ende 24 des Zentrierstiftes 19, wobei das freie Ende 24 von dem Verbindungselement 16 umfänglich um 180 Grad umschlossen ist. Dabei liegt der Zentrierstift 19 umfänglich mit etwa 180 Grad an dem Verbindungselement 16 an. Das Verbindungselement 16 weist eine Fangausnehmung 25 auf, die fahrbahnseitig offen ausgebildet ist, was vorliegend bedeutet, dass die Fangausnehmung 25 zu der Konsole 13 hin offen ausgebildet ist. Zugleich ist die Fangausnehmung 25 zu der zugeordneten Trennung 17 hin offen ausgebildet, so dass man im Bereich der Fangausnehmung 25 an dem Zentrierstift 19 vorbei auf die Stirnwand 20 des Hebels 14 blickt. Der Zentrierstift 19 greift mit seinem freien Ende 24 derart in die Fangausnehmung 25 ein, dass das freie Ende 24 komplett in der Fangausnehmung 25 versenkt ist.

Das Verbindungselement 16 weist eine fahrbahnseitig ausgerichtete Anschlagfläche 26 für einen Anschlagpuffer 27 auf, wobei sich die Anschlagfläche 26 im Wesentlichen in einer durch die Fahrzeuglängsrichtung x und die Fahrzeugquerrichtung y aufgespannten Ebene erstreckt. Fig. 5 zeigt einen Zustand, der bei einem zu Wartungszwecken nach vorn gekippten Fahrerhaus 6 vorliegt, bei dem das komplette Gewicht (physikalisch korrekt: die komplette Masse) des Fahrerhauses 6 in den Fahrerhausstabilisator 7 eingeleitet wird. Dadurch werden die Anschlagflächen 26 auf die Anschlagpuffer 27 gedrückt. In die Anschlagfläche 26 ist die Fangausnehmung 25 eingelassen. Da das freie Ende 24 des Zentrierstiftes 19 komplett in der Fangausnehmung 25 versenkt ist, kann die Anschlagfläche 26 durch den Anschlagpuffer 27 beaufschlagt werden, ohne dass dabei das freie Ende 24 des Zentrierstiftes 19 stört. Die Fangausnehmung 25 weist zwei Zentrierschrägen 28 auf, die sich in Fahrzeuglängsrichtung x erstrecken und die in Fahrzeughochrichtung z zu der fahrbahnseitigen Öffnung hin erweitert ausgebildet sind. Die Fangausnehmung 25 weist in dem dargestellten Schnitt eine halbrunde Kontur zur anliegenden Aufnahme des freien Endes 24 des Zentrierstiftes 19 in einer Wannenlage auf. Weiterhin weist die Fangausnehmung 25 die beiden sich fahrbahnseitig öffnenden Zentrierschrägen 28 auf, durch die im Rahmen der Montage Fahrerhausstabilisators 7 eine selbstzentrierende Wirkung gegeben ist. Die Zentrierschrägen 28 gehen in den Anschlagflächen 26 über.

Fig. 6 zeigt die hintere Fahrerhauslagerung 5 mit einer oberen Brücke 29, die sich in Fahrzeugquerrichtung y erstreckt und an ihren Enden jeweils eine Fangtasche 30 aufweist. Die beiden Fangtaschen 30 dienen zur Aufnahme von stuhlartig ausgebildeten hinteren Fahrerhausabstützungen 31, die sich dadurch auszeichnen, dass sie einstückig ausgebildet sind. Mit rechtwinklig zueinander ausgerichteten Flächen, die, bildlich gesprochen, Sitzflächen und Anlehnflächen eines Stuhls darstellen, sind die Fahrerhausabstützungen 31 an das Fahrerhaus 6 durch nicht dargestellte Schraubverbindungen angebunden. Eine untere, explodiert dargestellte, Brücke 32 ist an die Rahmenlängsträger 3 angeschraubt und zwischen der oberen Brücke 29 und den Rahmenlängsträgern 3 angeordnet. Die untere Brücke 32 und die obere Brücke 29 sind durch Feder- Dämpfer- Elemente 12 und durch einen sich im Wesentlichen in Fahrzeugquerrichtung erstreckenden Panhardstab 33 miteinander verbunden. Die untere Brücke 32 zeichnet sich dadurch aus, dass sie zweiteilig ausgebildet ist, wobei die beiden Teile in Fahrzeuglängsrichtung x einen Abstand zueinander aufweisen. Durch die zweiteilige Ausbildung der unteren Brücke 32 vereinfacht sich deren Herstellung.

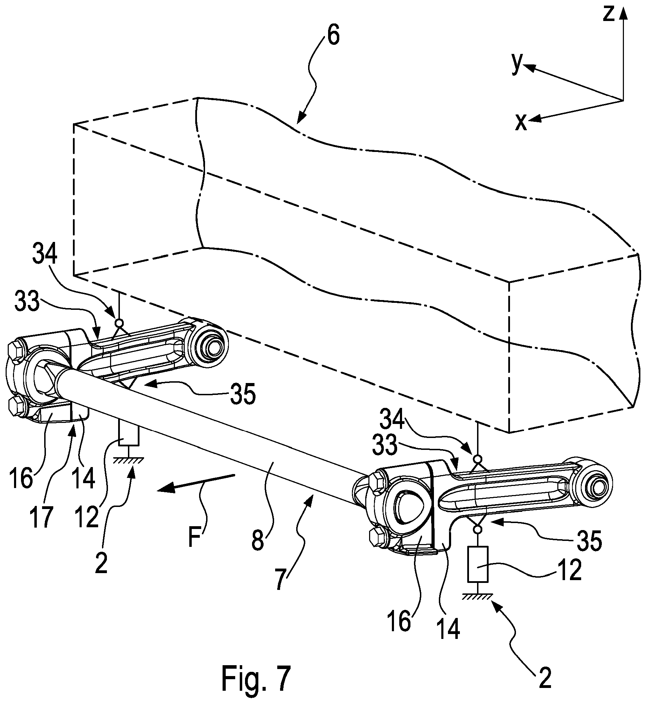

Bei der Ausführung gemäß Fig. 7 weist jeder der beiden Hebel 14 des Fahrerhausstabilisators 7 an seinem, dem zugeordneten Verbindungselement 16 zugewandten, Endabschnitt 33 eine Fahrerhausanbindung 34 und eine Fahrgestellrahmenanbindung 35 auf. Die Anbindung der Fahrgestellrahmenanbindung 35 an den Fahrgestellrahmen 2 erfolgt jeweils über ein zwischengeschaltetes Feder- Dämpfer- Element 12. Das Fahrerhaus 6 ist mit der Fahrerhausanbindung 34 verbunden. Sowohl die Fahrerhausanbindung 34 als auch die Fahrgestellrahmenanbindung 35 sind als gelenkige Anbindungen ausgebildet. Die Entnahme der Unterbaugruppe 18, aufweisend die Verbindungselemente 16 und das Torsionsrohr 8, kann im Wartungsfall montagefreundlich in Fahrtrichtung F erfolgen. Hierzu muss weder die Pressstopfenverbindung zwischen den Pressstopfen 10, den Enden 9 des Torsionsrohres 8 und den Lageraugen 23 der Verbindungselemente 16 gelöst werden, noch muss der Fahrerhausstabilisator 7 als Ganzes ausgebaut werden. Die Entnahme der Unterbaugruppe 18 kann dabei in der Fahrtrichtung F erfolgen, wodurch der Montageaufwand im Falle eines notwendigen Austauschs eines Fahrzeugkühlers verringert werden kann. Die Fahrerhausanbindung 34 und die Fahrgestellrahmenanbindung 35 können konstruktiv beispielsweise als Molekulargelenke, die auch als Pratzengelenke bezeichnet werden, umgesetzt sein. Insbesondere weist der Pressstopfen 10 bei dieser Ausgestaltung außerhalb des Torsionsrohres 8 keine Lagerstelle 11 auf.

### Bezugszeichen

- 1: Nutzfahrzeug
- 2: Fahrgestellrahmen
- 3: Rahmenlängsträger
- 4: vordere Fahrerhauslagerung
- 5: hintere Fahrerhauslagerung
- 6: Fahrerhaus
- 7: Fahrerhausstabilisator
- 8: Drehstabfeder, Torsionsrohr
- 9: Ende der Drehstabfeder
- 10: Pressstopfen
- 11: Lagerstelle
- 12: Feder- Dämpfer- Element
- 13: Konsole
- 14: Hebel
- 15: hintere Konsole
- 16: Verbindungselement
- 17: Montageschnittstelle, Trennung
- 18: Unterbaugruppe
- 19: Zentriermittel, Zentrierstift
- 20: Stirnfläche des Hebels
- 21: Stirnfläche des Verbindungselements
- 22: Klemmmittel, Schraube
- 23: Lagerauge
- 24: freies Ende des Zentriermittels
- 25: Fangausnehmung
- 26: Anschlagfläche
- 27: Anschlagpuffer
- 28: Zentrierschräge
- 29: obere Brücke
- 30: Fangtasche
- 31: hintere Fahrerhausabstützung
- 32: untere Brücke
- 33: Endabschnitt des Hebels
- 34: Fahrerhausanbindung
- 35: Fahrgestellrahmenanbindung

- x: Fahrzeuglängsrichtung
- y: Fahrzeugquerrichtung
- z: Fahrzeughochrichtung
- F: Fahrtrichtung

## Patentansprüche

1. Fahrerhausstabilisator (7) mit zwei sich in einer Fahrzeuglängsrichtung (x) parallel zueinander erstreckenden Hebeln (14), die in Fahrzeuglängsrichtung (x) jeweils durch ein Verbindungselement (16) verlängert sind, und einer sich in einer Fahrzeugquerrichtung (y) zwischen den beiden Verbindungselementen (16) erstreckenden Drehstabfeder (8), die an ihren beiden Enden (9) über das jeweils zugeordnete Verbindungselement (16) indirekt mit dem jeweils zugeordneten der beiden Hebel (14) fest verbunden ist, wobei der Fahrerhausstabilisator (7) zur Vereinfachung der Montage eine innerhalb desselben liegende Montageschnittstelle (17) aufweist, **dadurch gekennzeichnet, dass** die Montageschnittstelle (17) durch insgesamt genau zwei, in sich ebene und sich zugleich in Fahrzeugquerrichtung (y) erstreckende Trennungen (17) gebildet ist, die zwischen den beiden Verbindungselementen (16) und dem diesen jeweils zugeordneten Hebel (14) verlaufen.

2. Fahrerhausstabilisator (7) nach Anspruch 1, **dadurch gekennzeichnet, dass** sich die genau zwei Trennungen (17) jeweils in einer Ebene erstrecken, die durch die Fahrzeugquerrichtung (y) und eine Fahrzeughochrichtung (z) aufgespannt ist.

3. Fahrerhausstabilisator (7) nach einem der vorhergehenden Ansprüche, **dadurch gekennzeichnet, dass** die insgesamt zwei Trennungen (17) jeweils von einem sich in der Fahrzeuglängsrichtung (x) erstreckenden Zentriermittel (19) durchsetzt sind.

4. Fahrerhausstabilisator (7) nach Anspruch 3, **dadurch gekennzeichnet, dass** das Zentriermittel (19) als ein Zentrierstift ausgebildet ist, der jeweils fest in einem der Teile von Verbindungselement (16) und Hebel (14) sitzt, wobei der Zylinderstift (19) für das andere der Teile von Verbindungselement (16) und Hebel (14) einen Montageanschlag in Fahrzeughochrichtung (z) bildet.

5. Fahrerhausstabilisator (7) nach Anspruch 4, **dadurch gekennzeichnet, dass** ein freies Ende des Zentriermittels (19), insbesondere des Zentrierstiftes (19), jeweils von dem anderen der Teile von Verbindungselement (16) und Hebel (14) umfänglich maximal zur Hälfte, also um 180 Grad, umschlossen ist.

6. Fahrerhausstabilisator (7) nach einem der Ansprüche 3 bis 5, **dadurch gekennzeichnet, dass** zumindest ein Verbindungselement (16) eine fahrbahnseitig offene und zugleich zu der zugeordneten Trennung (17) hin offene Fangausnehmung (25) aufweist, in die das Zentriermittel (19), insbesondere der Zentrierstift (19), eingreift.

7. Fahrerhausstabilisator (7) nach einem der vorhergehenden Ansprüche, **dadurch gekennzeichnet, dass** die Verbindungselemente (16) jeweils eine fahrbahnseitig ausgerichtete Anschlagfläche (26) für einen Anschlagpuffer (27) aufweisen, wobei sich die Anschlagflächen (26) zumindest im Wesentlichen in einer durch die Fahrzeuglängsrichtung (x) und die Fahrzeugquerrichtung (y) aufgespannten Ebene erstrecken.

8. Fahrerhausstabilisator (7) nach einem der vorhergehenden Ansprüche, **dadurch gekennzeichnet, dass** die Verbindungselemente (16) jeweils ein mit einer unrunden Innenumfangskontur versehenes Lagerauge (23) aufweisen und die Drehstabfeder (8) zumindest an ihren Enden (9) jeweils mit einer an die unrunden Innenumfangskonturen der Lageraugen (23) angepassten, unrunden Außenumfangskontur versehen ist und mit diesen unrunden Außenumfangskonturen in dem jeweils zugeordneten Lagerauge (23) sitzt.

9. Fahrerhausstabilisator (7) nach Anspruch 8, **dadurch gekennzeichnet, dass** die Drehstabfeder (8) als ein Torsionsrohr ausgebildet ist, das in seinen beiden Enden (9) jeweils einen Pressstopfen (10) aufweist, der jeweils eine an unrunde Innenumfangskonturen der Enden (9) des Torsionsrohres (8) angepasste, unrunde Außenumfangskontur aufweist und der jeweils mit dem zugeordneten Ende (9) des Torsionsrohres (8) sowie mit dem zugeordneten Lagerauge (23) eine Presspassung bildet.

10. Fahrerhausstabilisator (7) nach Anspruch 9, **dadurch gekennzeichnet, dass** jeder der beiden Pressstopfen (10) außerhalb des Torsionsrohres (8) eine Lagerstelle (11) zur Anbindung eines Fahrerhauses (6) und/oder eines Fahrgestellrahmens (2) aufweist.

11. Fahrerhausstabilisator (7) nach einem der Ansprüche 1 bis 9, **dadurch gekennzeichnet, dass** jeder der beiden Hebel (14) an seinem, dem zugeordneten Verbindungselement (16) zugewandten, Endabschnitt (33) eine Fahrerhausanbindung (34) und/oder eine Fahrgestellrahmenanbindung (35) aufweist.

## Claims

1. Driver's cab stabilizer (7) with two levers (14) which extend parallel to one another in a vehicle longitudinal direction (x) and are extended in the vehicle longitudinal direction (x) in each case by way of a connecting element (16), and with a torsion bar (8) which extends between the two connecting elements (16) in a vehicle transverse direction (y) and is fixedly connected at its two ends (9) via the respective associated connecting element (16) indirectly to the respective associated one of the two levers (14), the driver's cab stabilizer (7) having, in order to simplify the assembly, an assembly interface (17) which lies within it, **characterized in that** the assembly interface (17) is formed by way of a total of precisely two points of separation (17) which are planar per se, extend at the same time in the vehicle transverse direction (y), and run between the two connecting elements (16) and the lever (14) which is assigned to them in each case.

2. Driver's cab stabilizer (7) according to Claim 1, **characterized in that** the precisely two points of separation (17) extend in each case in a plane which is defined by way of the vehicle transverse direction (y) and a vehicle vertical direction (z).

3. Driver's cab stabilizer (7) according to either of the preceding claims, **characterized in that** the total of two points of separation (17) are penetrated in each case by a centring means (19) which extends in the vehicle longitudinal direction (x).

4. Driver's cab stabilizer (7) according to Claim 3, **characterized in that** the centring means (19) is configured as a centring pin which is seated in each case fixedly in one of the parts of connecting element (16) and lever (14), the cylindrical pin (19) for the other one of the parts of connecting element (16) and lever (14) forming an assembly stop in the vehicle vertical direction (z).

5. Driver's cab stabilizer (7) according to Claim 4, **characterized in that** a free end of the centring means (19), in particular of the centring pin (19), is enclosed in each case by the other one of the parts of connecting element (16) and lever (14) over at most up to half of its periphery, that is to say by 180°.

6. Driver's cab stabilizer (7) according to one of Claims 3 to 5, **characterized in that** at least one connecting element (16) has a catching recess (25) which is open on the roadway side, at the same time is open towards the associated point of separation (17), and into which the centring means (19), in particular the centring pin (19), engages.

7. Driver's cab stabilizer (7) according to one of the preceding claims, **characterized in that** the connecting elements (16) have in each case one stop face (26), oriented on the roadway side, for a stop buffer (27), the stop faces (26) extending at least substantially in a plane which is defined by way of the vehicle longitudinal direction (x) and the vehicle transverse direction (y).

8. Driver's cab stabilizer (7) according to one of the preceding claims, **characterized in that** the connecting elements (16) have in each case one bearing socket (23) which is provided with n non-round internal peripheral contour, and the torsion bar (8) is provided, at least at its ends (9), in each case with a non-round external peripheral contour, which is adapted to the non-round internal peripheral contours of the bearing sockets (23), and is seated by way of these non-round external peripheral contours in the respective associated bearing socket (23).

9. Driver's cab stabilizer (7) according to Claim 8, **characterized in that** the torsion bar (8) is configured as a torque tube which, in its two ends (9), has in each case one press-fit plug (10) which in each case has a non-round external peripheral contour, which is adapted to non-round internal peripheral contours of the ends (9) of the torque tube (8), and forms a press fit in each case with the associated end (9) of the torque tube (8) and with the associated bearing socket (23).

10. Driver's cab stabilizer (7) according to Claim 9, **characterized in that** each of the two press-fit plugs (10) has, outside the torque tube (8), a bearing point (11) for attaching a driver's cab (6) and/or a chassis frame (2).

11. Driver's cab stabilizer (7) according to one of Claims 1 to 9, **characterized in that**, on its end section (13) which faces the associated connecting element (16), each of the two levers (14) has a driver's cab attachment (34) and/or a chassis frame attachment (35).

## Revendications

1. Stabilisateur de cabine de conduite (7) comportant deux leviers (14) s'étendant parallèlement l'un à l'autre dans une direction longitudinale du véhicule (x), lesquels sont prolongés respectivement par un élément de liaison (16) dans la direction longitudinale du véhicule (x), et un ressort à barre de torsion (8) s'étendant dans une direction transversale du véhicule (y) entre les deux éléments de liaison (16), lequel ressort est, à ses deux extrémités (9), relié fixement indirectement au levier associé respectivement des deux leviers (14) par le biais de l'élément de liaison (16) respectivement associé, le stabilisateur de cabine de conduite (7) comprenant, pour simplifier le montage, une interface de montage (17) située à l'intérieur de celui-ci, **caractérisé en ce que** l'interface de montage (17) est formée par au total exactement deux séparations (17) planes intrinsèquement et s'étendant en même temps dans la direction transversale du véhicule (y), lesquelles séparations s'étendent entre les deux éléments de liaison (16) et le levier (14) respectivement associé à ceux-ci.

2. Stabilisateur de cabine de conduite (7) selon la revendication 1, **caractérisé en ce que** les exactement deux séparations (17) s'étendent respectivement dans un plan qui est défini par la direction transversale du véhicule (y) et une direction verticale du véhicule (z).

3. Stabilisateur de cabine de conduite (7) selon l'une des revendications précédentes, **caractérisé en ce que** les deux séparations (17) au total sont traversées respectivement par un moyen de centrage (19) s'étendant dans la direction longitudinale du véhicule (x).

4. Stabilisateur de cabine de conduite (7) selon la revendication 3, **caractérisé en ce que** le moyen de centrage (19) est réalisé sous la forme d'une goupille de centrage qui est calée respectivement fixement dans l'une des pièces parmi l'élément de liaison (16) et le levier (14), la goupille cylindrique (19) pour l'autre des pièces parmi l'élément de liaison (16) et le levier (14) formant une butée de montage dans la direction verticale du véhicule (z).

5. Stabilisateur de cabine de conduite (7) selon la revendication 4, **caractérisé en ce qu'**une extrémité libre du moyen de centrage (19), en particulier de la goupille de centrage (19), est entourée circonférentiellement respectivement par l'autre des pièces parmi l'élément de liaison (16) et le levier (14) au maximum sur la moitié, donc sur 180 degrés.

6. Stabilisateur de cabine de conduite (7) selon l'une des revendications 3 à 5, **caractérisé en ce qu'**au moins un élément de liaison (16) comprend un évidement de réception (25) ouvert du côté de la voie de circulation et en même temps ouvert vers la séparation (17) associée, évidement dans lequel le moyen de centrage (19), en particulier la goupille de centrage (19), vient en prise.

7. Stabilisateur de cabine de conduite (7) selon l'une des revendications précédentes, **caractérisé en ce que** les éléments de liaison (16) comprennent respectivement une surface de butée (26), orientée du côté de la voie de circulation, pour un tampon de butée (27), les surfaces de butée (26) s'étendant au moins sensiblement dans un plan défini par la direction longitudinale du véhicule (x) et la direction transversale du véhicule (y).

8. Stabilisateur de cabine de conduite (7) selon l'une des revendications précédentes, **caractérisé en ce que** les éléments de liaison (16) comprennent respectivement un œillet de palier (23) doté d'un contour circonférentiel intérieur non rond et le ressort à barre de torsion (8) est doté, au moins à ses extrémités (9), respectivement d'un contour circonférentiel extérieur non rond adapté aux contours circonférentiels intérieurs non ronds des œillets de palier (23) et est calé par ces contours circonférentiels extérieurs non ronds dans l'œillet de palier (23) respectivement associé.

9. Stabilisateur de cabine de conduite (7) selon la revendication 8, **caractérisé en ce que** le ressort à barre de torsion (8) est réalisé sous la forme d'un tube de torsion qui comprend dans ses deux extrémités (9) respectivement un bouchon à ajustement serré (10) qui comprend respectivement un contour circonférentiel extérieur non rond adapté à des contours circonférentiels intérieurs non ronds des extrémités (9) du tube de torsion (8) et qui forme respectivement un ajustement serré avec l'extrémité (9) associée du tube de torsion (8) ainsi qu'avec l'œillet de palier (23) associé.

10. Stabilisateur de cabine de conduite (7) selon la revendication 9, **caractérisé en ce que** chacun des deux bouchons à ajustement serré (10) comprend en dehors du tube de torsion (8) un point d'appui (11) pour la connexion d'une cabine de conduite (6) et/ou d'un cadre de châssis (2).

11. Stabilisateur de cabine de conduite (7) selon l'une des revendications 1 à 9, **caractérisé en ce que** chacun des deux leviers (14) comprend, au niveau de sa partie d'extrémité (33) tournée vers l'élément de liaison (16) associé, une connexion de cabine de conduite (34) et/ou une connexion de cadre de châssis (35).
